Europäisches Patentamt

European Patent Office

Office européen des brevets

(11) Publication number: 0 349 248
A2

# EUROPEAN PATENT APPLICATION

(21) Application number: 89306484.0

(51) Int. Cl.⁴: B29C 67/18

(22) Date of filing: 26.06.89

(30) Priority: 01.07.88 US 214431

(43) Date of publication of application:
03.01.90 Bulletin 90/01

(84) Designated Contracting States:
AT BE CH DE ES FR GB GR IT LI LU NL SE

(71) Applicant: SOUTHLAND INDUSTRIES, INC.
PO Box 868
Norfolk Virginia 23501(US)

(72) Inventor: Hetherington, Ray C.
3751 Clipper Bay Drive
Virginia Beach Virginia 23455(US)
Inventor: Slagowski, Eugene L.
4713 Berry Wood Road
Virginia Beach Virginia 23464(US)

(74) Representative: Read, Matthew Charles et al
Venner Shipley & Co. 368 City Road
London EC1V 2QA(GB)

(54) Method for producing a molded in place gasket.

(57) Method for producing a seal molded-in-place on a substrate which involves providing a two-part liquid cure composition, supplying the liquid cure composition to a surface of the substrate which is maintained at a temperature sufficiently low to prevent physical distortion and damage to the substrate. The molded-in-place seal is then cured. A substrate having a molded-in-place seal of a cured liquid reactive polymer.

EP 0 349 248 A2

EP 0 349 248 A2

# METHOD FOR PRODUCING A MOLDED IN PLACE GASKET

## BACKGROUND OF THE INVENTION

### 1. Field of the Invention

The present invention relates to room temperature molding procedures. More particularly, the present invention is directed to liquid injection molding (LIM) procedures using a two-part liquid addition curing material capable of setting up at relatively low temperatures. Thus, the present invention relates to methods for achieving superior bonds between synthetic elastomers and metals as well as composite materials, and more specifically to a method for achieving a superior bond between silicone rubber compositions and metals, such as cast aluminum substrates. Specifically, the present invention is directed to a method for producing gaskets or seals which are molded in place on a substrate using a two-part liquid addition cure silicone rubber composition.

### 2. Discussion of Background and Material Information

Various techniques are known in the art for adhering sealing materials, such as silicone rubber compositions and the like, to surfaces of metal or composite articles.

A conventional technique for adhering silicone rubber to a metal member is to subject the metal member to a phosphating treatment prior to priming the metal member and contacting the member with the silicone rubber. Another technique for preparing metal surfaces for silicone rubbers is sand blasting. In U.S. Patent No. 4,719,065, GIBBON, a method is proposed for bonding silicone rubber to a metal member wherein the metal member is first treated by heating the metal member to a temperature and for a time sufficient to form an oxide layer on the outer surface of the metal member prior to contact with an uncured silicone rubber composition which is subsequently cured to bond the heated metal member to the silicone rubber composition.

U.S. Patent No. 4,382,057, TOLENTINO, is directed to a silicone rubber compositions which are suitable for liquid injection molding machines. Typically, silicone rubber compositions are used in the production of plastic parts, such as electrical connectors and the like. The liquid injection molding method involves injecting the silicone rubber composition into a mold which is then heated to a sufficiently high temperature to cure the silicone rubber materials into a predesigned geometrical configuration. Subsequent to curing, the mold is released and the molded silicone rubber part is removed from the mold.

U.S. Patent No. 4,474,724, LAGHI, is directed to a plunger injection molding machine for utilizing such a silicone rubber composition.

U.S. Patent No. 4,442,060, BOUVEROT et al., discloses the injection-molding of pasty organopolysiloxane compositions which are thermoset to form silicone elastomer products which are then vulcanized under the action of heat. As in the previously mentioned incidence, the silicone rubber compositions are injected into a mold which is subjected to heat to permit the composition to harden or become cured after which the molded silicone rubber article is removed from the mold.

Notwithstanding that the previously mentioned compositions have been proposed for liquid injection molding (LIM) techniques, it is not believed that prior to the present invention liquid injection compositions have been successfully used in a mold-in-place system for achieving a molded in place seal, gasket or the like, that is intended to remain in place with the substrate to which it is applied.

Although attempts have been made to mold in place a gasket on a cast aluminum oil pan, conventional compositions were found to be too viscous and too cumbersome to vulcanize. In this regard, conventional peroxide cured silicone, i.e., a high consistency elastomer (HCE), has been proposed for such use, but in order to mold in place this type of material, the oil pan required heating prior to molding to temperatures of at least 400°F. which caused the aluminum casting to warp and caused a mold shut-off problem which resulted in an incomplete gasket. Moreover, the peroxide cured silicone material was so viscose that eight individual mold runners were required thus making the process extremely inefficient due to the scrap material which resulted.

2

## SUMMARY OF THE INVENTION

The present invention, therefore, is directed to a method for producing molded in place seals, gaskets and the like, which are not susceptible to the previously described problems.

In this regard, the present invention is directed to a liquid injection molding (LIM) procedure wherein a two-part liquid addition cure composition is injected into a mold formed in part by a surface of the substrate to which the seal, gasket or the like is required and molded in place to adhere to the surface of the substrate.

In accordance with the present invention, the liquid addition cure composition is supplied to a surface of the substrate to form a seal or gasket thereon which is maintained at substantially ambient room temperature during the procedure. Subsequently, the seal is permitted to cure on the surface of the substrate while being subjected to a temperature maintained sufficiently low to prevent physical distortion and damage to the substrate.

Thus, the present invention permits a seal, gasket, or the like, to be molded in place in a procedure wherein the the substrate is not preheated prior to injection molding but rather is maintained at substantially ambient room temperature during injection of the liquid addition cure composition, and the temperature of the curing operation is maintained below about 400°F., and preferably within the range of about 350°F.-400°F., and most preferably at a temperature of about 350°F., for a period of time within the range of about 15 minutes to 30 minutes, and preferably for about 30 minutes to avoid physical distortion or damage to the substrate.

In accordance with the present invention, a two-part liquid addition cure composition is supplied to the surface of the substrate by injecting the liquid composition into a space provided between the surface of the substrate and a mold surface placed on the surface of the substrate to enclose such space.

The liquid sealing material used in accordance with the present invention should have a viscosity within the range of about 500,000 to about 1,500,000 centipoises, and is preferably a two-part liquid addition cure composition wherein the first part contains a curing catalyst and the second part contains a cross-linking agent, which are present in a ratio of about 1:1 to about 10:1, respectively.

The two-part liquid addition cure composition may be selected from the group consisting of silicone rubber compositions and organopolysiloxane compositions and is preferably a SiH-olefin platinum catalyzed composition.

Further objects of this invention together with additional features and advantages thereof will become apparent from the following detailed description of the preferred embodiments of the invention read in conjunction with the accompanying drawings, given by way of non-limiting example of the present invention.

## BRIEF DESCRIPTION OF THE DRAWINGS

Fig. 1 is an illustration of the injection molding apparatus of the present invention showing the mold platen and oil pan taken in cross-section.

Fig. 2 is a perspective view of an oil pan having bolt holes provided with a gasket in accordance with the present invention.

Fig. 3A is a cross-section of a seal in accordance with the present invention taken at the apex of the end loops of a gasket for an oil pan.

Fig. 3B is a cross-section of the seal otherwise shown in Fig. 3A taken along the side rails of the gasket.

Fig. 3C is a cross-section of the seal taken at the end loops of the gasket showing the geometry of the seal.

## DETAILED DESCRIPTION OF THE INVENTION

In general, the present invention is directed to a method for producing an elastomeric material molded in place on a surface of a substrate which during the molding procedure is maintained at substantially ambient room temperature, i.e., is not preheated, and is only subjected during curing and post curing procedures to elevated temperatures which nevertheless are sufficiently low to prevent physical distortion and damage to the substrate.

For purposes of the present invention, the substrate may be made from a variety of materials including composites, such as plastic or rubber materials, in addition to metals, such as cast aluminum and steel. Representative examples of composite materials include thermoset compositions such as vinyl ester, polyester, phenolic, and polyamideimide compositions. A particularly preferred substrate for purposes of the present invention is cast aluminum. In this regard, although the present invention may be described herein with respect to an aluminum oil pan cast with a groove as the surface into which the elastomeric material is injected to form a molded in place gasket, the substrate, metal or otherwise, can be in the form of a variety of articles, such as rocker covers, timing chain covers, carrier frames, and the like, which require a gasket or seal.

A number of liquid injection molding compositions are invisioned for purposes of the present invention, including two-part liquid reactive polymer systems, e.g., silicone, fluorosilicone, and organic elastomers. Particularly suitable compositions are two-part liquid cure compositions, such as two-part platinum reactive systems, with the preferred liquid injection molding composition being a silicone rubber composition, such as the SiH-olefin platinum catalyzed composition, for example as disclosed in U.S. Patent 4,382,057, the disclosure of which is hereby incorporated by reference thereto. An alternative composition which could be used is an organopolysiloxane composition as disclosed in U.S. Patent No. 4,442,062, the disclosure of which is also hereby incorporated by reference thereto.

The silicone rubber composition most preferred for purposes of the present invention is a two-part, liquid addition cure silicone rubber, as disclosed in U.S. Patent 4,382,057, wherein one part includes a catalyst agent and the other part contains a cross-linking agent. Preferably the first part and the second part of the two-part, liquid addition cure silicone rubber composition are present in a ratio of about 1:1 to about 10:1. The preferred curing catalyst is platinum.

For purposes of the present invention, it is preferred that the viscosity of the silicone rubber composition is within the range of 500,000-1,500,000 centipoises.

The two-part, liquid addition cure composition, as described herein, is critical for purposes of the method of the present invention which requires a low viscosity material so as to eliminate the runner system, conventionally used in liquid injection molding techniques, and to allow rapid vulcanization to take place by substantially curing the material to a demoldable state using the heat provided by the mold platen.

It is preferred to include up to about 2% of a color additive in the system to permit easy identification of the resultant seal or gasket as a molded-in-place gasket so as to clearly distinguish the same from conventionally molded free state silicone gaskets which normally require replacement after disassembly of the parts for which the gasket functions as a seal. In this regard cobalt is particularly suitable for this purpose where a blue color is desired, and is believed to impart heat stability to the resultant polymer.

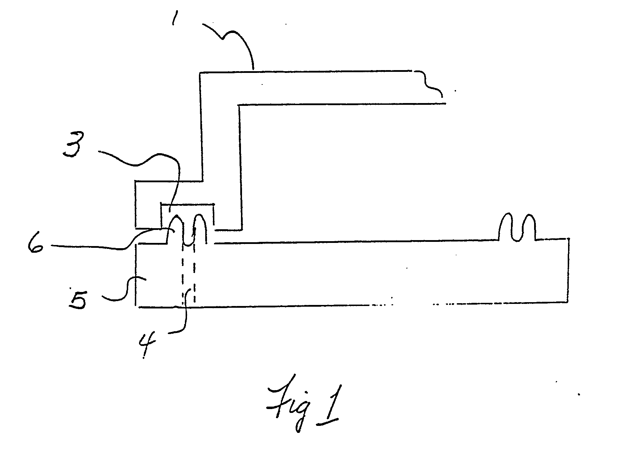

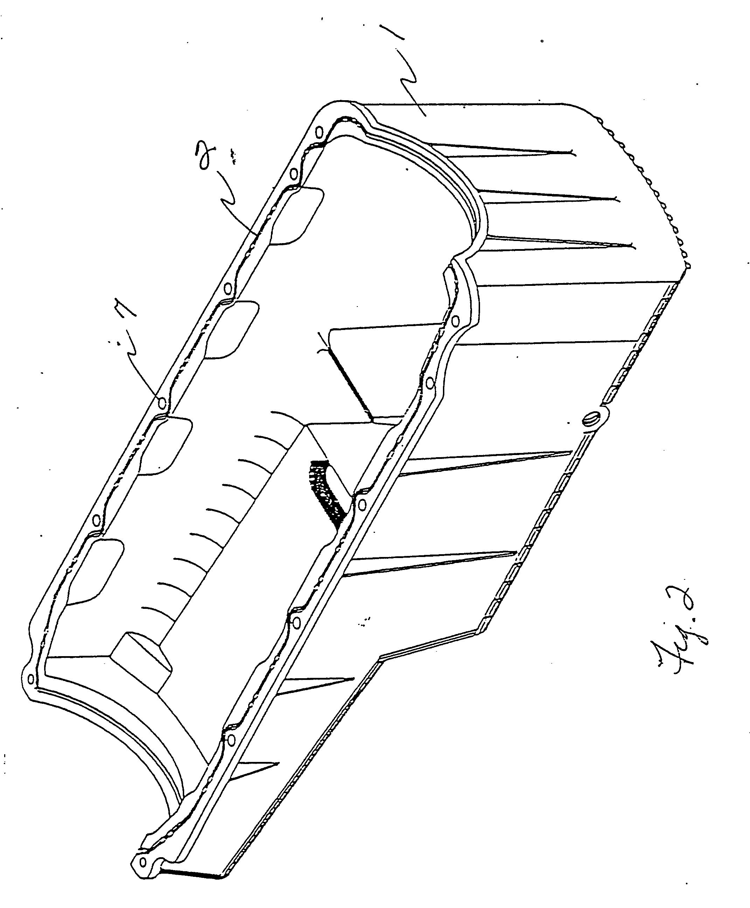

Turning now to Fig. 1, the method of the present invention will be described with respect to manufacturing a molded in place gasket on a cast aluminum oil pan, as shown in Fig. 2.

In this regard, an oil pan 1 is cast from a metal such as aluminum, to have a groove 3 for receiving the two part, liquid cure silicone rubber composition 2 in accordance with the present invention.

The silicone rubber composition is supplied through a supply port 4 of a mold platen 5 which is provided with a protuberance 6 is designed so that the resultant seal is formed into a preselected shape to provide a void volume seal or bead in groove 3. Thus, groove 3 of the oil pan is the surface of the substrate to which the silicone rubber composition is supplied. The space in which the silicone rubber composition is formed into the preselected shape is an enclosure formed by mating the substrate, or in this case the oil pan, with the platen of the mold so as to define a space between the groove in the oil pan and the mold platen into which the silicone rubber composition in accordance with the present invention is injected.

The liquid injection molding technique of the present invention is unique in that the silicone rubber composition does not require heating prior to injection into the space defined by the mold platen and the groove of the oil pan. Although the mold platen may be heated, for example to a temperature within the range of 300°F. to 400°F., and most preferably to a temperature within the range of 375°F. to 400°F., no heating of the substrate is required during the injection molding step. Although the silicone rubber composition used for purposes of the present invention requires a certain amount of heat in order to initially begin to set or vulcanize, this is provided by conduction of heat from the mold platen 4 into the area of the oil pan surrounding the interior surface of the groove which acts as a heat sink, so as to transfer heat from the mold platen to the silicone rubber material injected into the groove in the oil pan. Except for this heat transfer, the oil pan substrate is not subjected to preheating and is maintained at substantially ambient room temperature prior to the injection of the liquid injection molding (LIM) composition.

The silicone rubber composition may be supplied through passage way 4 in platen 5 using any conventional injection molding machine suitable for this purpose, such as the liquid injection molding machine for utilizing silicone compositions disclosed in U.S. Patent 4,474,724, the disclosure of which is hereby incorporated by reference thereto. Preferred for purposes of the present invention, however, is a gluco molding machine incorporating a Semco cartridge gun which is capable of injecting relatively small shots of silicone rubber composition at a pressure within the range of 1,800 psi-3,000 psi, and most preferably at about 2,500 psi, through passage way 4. In order to permit such injection pressures to be used, however, it is necessary to bolt, or otherwise secure, the mold platen 5 to the oil pan 1 substrate. In this regard, as more clearly shown in Fig. 2, the oil pan is provided with a series of bolt holes which are ultimately used to connect the oil pan to the engine block. Thus, the mold platen 5 would be designed to have orifices corresponding to the bolt hole pattern of the oil pan. This permits the mold platen 5 to be oriented so that the mold platen 5 can be secured to oil pan 1 by means of bolts or other means for connection which are passed through opening 7 in the oil pan and tighten to secure the oil pan 1 and the mold platen 5 tightly together.

In accordance with the present invention, only two gates, for example in contrast to eight or more gates which would be required if conventional high consistency elastomer (HCE) techniques and material were used, are necessary for purposes of providing a sufficient amount of silicone rubber composition in accordance with the present invention to completely fill the groove in the oil pan. Thus, the injection gun is first placed in one of the two gates and the prescribed amount of pressure is applied to inject an amount of silicone rubber composition sufficient to fill approximately half way down the side rail of the oil pan to about the mid-point. When the silicone rubber composition has been observed to reach this extent, the injection gun is then inserted into the other of the two gates, which is on an opposite side rail of the oil pan, preferably directly across from the first gate, so as to completely fill the remaining space in the groove of the oil pan. In each instance, the injection of the silicone rubber composition is continued until trace amounts appear at the end loops of the oil pan.

When the groove in the oil pan has been completely filled with the silicone rubber composition, the oil pan with the mold platen attached thereto, are then transferred into a hot air circulating oven, such as a Blue M Oven heated to a temperature within the range of about 350°F. to 400°F. for about 15 to 30 minutes, and preferably about 30 minutes, to cure the silicone rubber composition in place to form a seal or gasket in the groove of the oil pan.

The oil pan with attached mold platen is then removed from the oven and the bolts loosened and removed to permit the oil pan to be pryed apart from the gate and the mold after which the gate is trimmed of excess cured silicone rubber composition prior to removing the mold platen from the oil pan.

The oil pan with the gasket molded in place is then post cured in a Blue M Oven heated to a temperature of about 400°F for about 4 hours.

Although some physical distortion of the aluminum casting may occur during the curing and post curing heat treatments, any such distortion is not permanent because the casting resumes substantially its original shape upon cooling. Also, inasmuch as the gasket which has been molded in place is elastic, distortion of the casting at this stage does not adversely affect the characteristics of the gasket. In contrast, if the casting is distorted by preheating prior to liquid injection molding, the casting and the mold cannot be clamped tight enough together to permit a complete fill of the groove to be obtained.

Although not required, the groove in the oil pan can have its surface prepared, for example by coating with a primer or an adhesive to improve the adherence of the silicone rubber composition to the surface of the aluminum, prior to the injection molding procedure. Preferred for this purpose is a moisture curable adhesive primer. In this regard, it is preferred to apply the primer at a relative humidity of 50% after cleaning the surface of the groove in the oil pan with a toluene solvent. The primed surface should then be permitted to stand until a white residue or anhydride appears thereby indicating that the surface is in condition to permit adhesion of the silicone rubber composition to the surface of the primed groove of the oil pan.

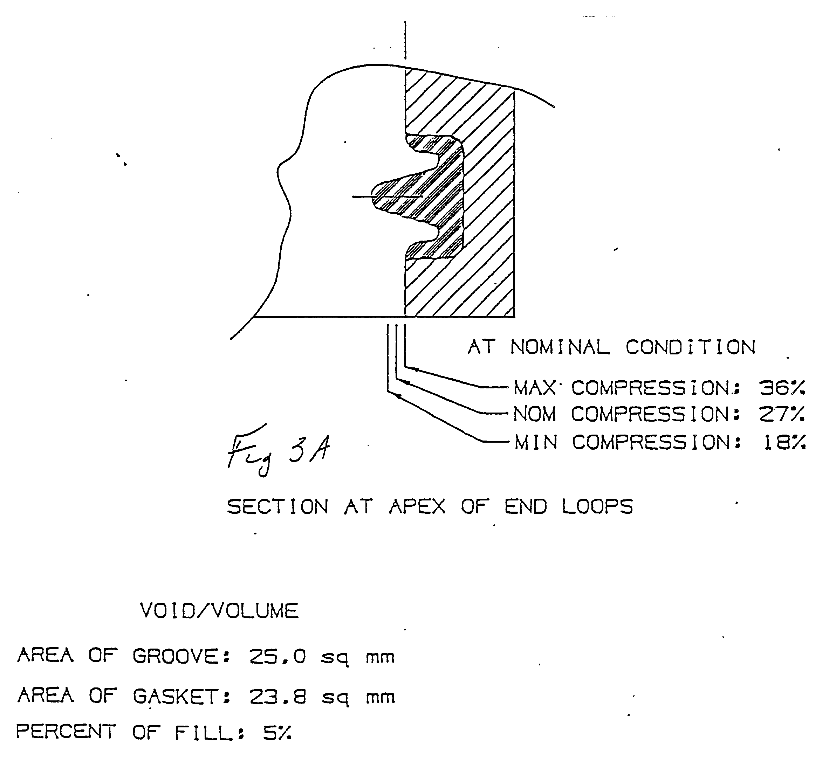

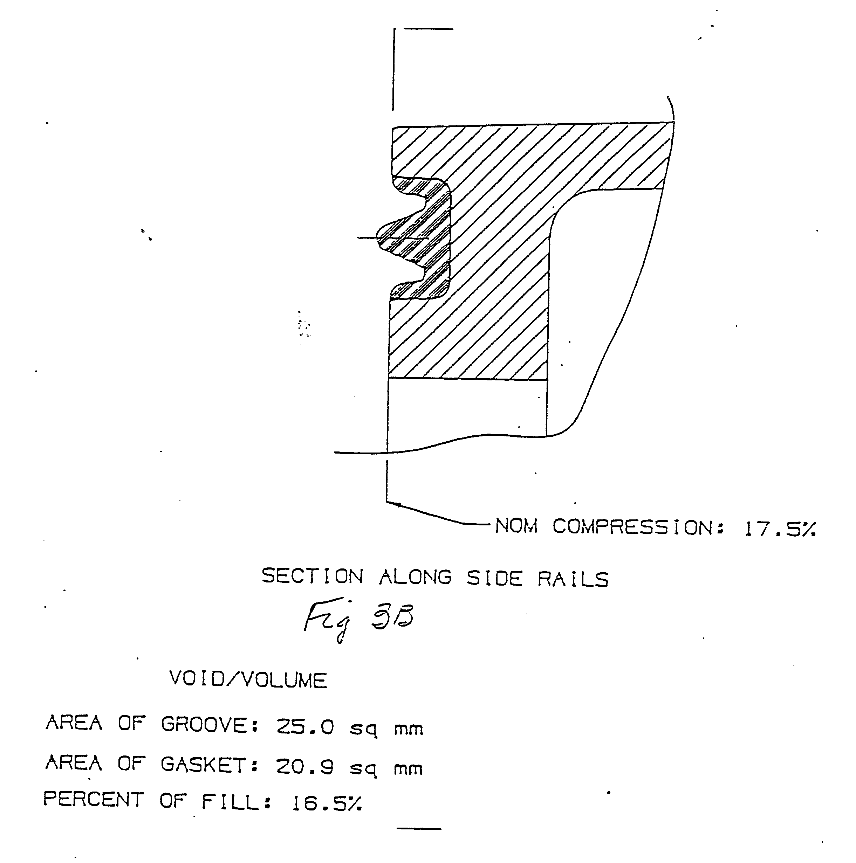

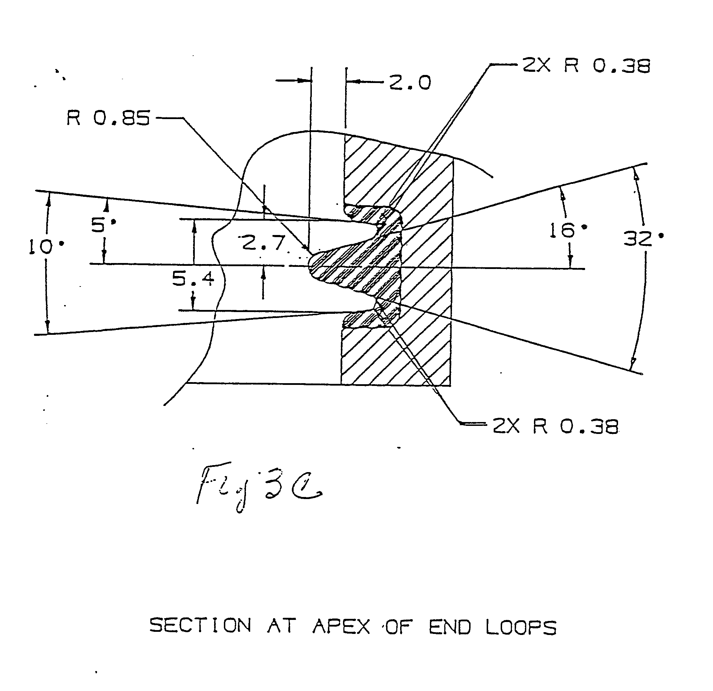

The bead of the seal in the groove in the oil pan may be molded in place in accordance with the present invention to have a variety of shapes which have been found to be effective for purposes of providing a proper seal of the oil pan when bolted in place to the engine block. The seals produced in accordance with the present invention, as illustrated in Fig. 3, are referred to herein as void volume seals.

In Fig. 3A, a section of the bead of the seal at the apex of the end loops of the oil pan as illustrated to show the bead of the seal in its nominal condition. In this embodiment, the bead of the seal may be subjected to a minimum compression of 18%, a nominal compression of 27%, and a maximum compression of 36%. The void/volume of the section of the seal illustrated in Fig. 3A can be described in the following terms:

| Area of groove: | 25.0 sq mm |
| Area of gasket: | 23.8 sq mm |
| Percentage of Void: | 5% |

Fig. 3B shows a section of the bead of the seal in accordance with the present invention taken along the side rails of the oil pan wherein the bead of the seal has experienced a nominal compression of 17.5%. The section of the bead of the seal as illustrated in Fig. 3B has a void/volume which may be described in the following terms:

| Area of groove: | 25.0 sq mm |
| Area of gasket: | 20.9 sq mm |
| Percentage of Void: | 16.5% |

The void volume of the seal is important and must be determined in view of the oil swell and the rubber displacement which are expected to occur when the oil pan with the molded in place gasket is installed. Related to this, the void volume should fall within the range of about 4-17%. These factors also influence the height of the sealing bead which is compressed when the oil pan is connected to the engine block. In this regard, design compression of the sealing bead preferably should fall within 15-30%, with 30% design compression being the maximum practical without adversely affecting the gasket which would then tend to split over time. Also, the compression set of the gasket measured, at 175°C for 22 hours with 25% deflection, should be less than 35%.

## EXAMPLE

The following example is given to illustrate material comparison data for mold-in-place gaskets formed from a platinum addition cure silicon rubber composition, i.e., liquid injection molding (LIM) composition in accordance with the present invention versus gasket material formed using a conventional peroxide heat cured silicone, i.e., high consistency elastomer (HCE).

## TABLE 1
### MATERIAL COMPARISON DATA FOR MOLD-IN-PLACE SILICONE SEAL
### PHYSICAL AND MECHANICAL

MATERIAL:

| | | HCF | LIM |
|---|---|---|---|
| HCE ASTM Slab Cure Condition | LIM ASTM Slab Cure Conditi( | | |
| Press Cure 10 min @ 350F | Press Cure 1 min @ 350F | | |
| Post Cure none | Post Cure 4 hrs @ 400F | | |

| ORIGINAL PROPERTIES | SPECIFICATION | HCF RESULTS | LIM RESULTS |
|---|---|---|---|
| Hardness, Shore A (ASTM D 2240) | 40 - 50 | 43 | 65 |
| Tensile, MPa (ASTM D412) | 6.5 min | 7.8 | 7.1 |
| Total Elongation, % (ASTM D 412) | 750 min | 763 | 355 |
| 100% Modulus, kPa (ASTM D 412) | 700-1290 | 1187 | 4430 |
| Tear Strength, kN/m (ASTM D 624, Die B) | 27 min | 35 | 24 |
| Compression Set (ASTM D 395, Method B) 22 hrs @ 175 C) | 35 max | 29 | 21 |
| Cure System | | peroxide | Liquid reactants |
| HEAT AGED (ASTM D 573) (168 hrs @ 175 C) | | | |
| Hardness Change, Shore A, pts | +15 max | +7 | +4 |
| Tensile Strength Change, % | -30 max | -4 | 0 |
| Elongation Change, % | -32 max | -5 | -26 |
| AGED IN ASTM OIL 1 (ASTM D 471) (168 hrs @ 150 C) | | | |
| Volume Change, % | 0 to +10 | +6 | +5 |
| AGED IN ASTM OIL 2 (ASTM D 471) (168 hrs @ 150C) | | | |
| Hardness Change, Shore A, pts | -12 max | -2 | -1 |
| Tensile Strength Change, % | -40 max | -24 | -15 |
| Elongation Change, % | -38 max | -25 | -26 |
| Volume Change, % | 0 to +15 | +10 | +10 |

The molded-in-place sealing bead in accordance with the present invention offers numerous advantages over conventional gaskets. In this regard, it permits a simplified engine assembly in that a single item, for example an oil pan provided with a sealing bead molded in place, versus a separate gasket and the oil pan, may be delivered to the main line for assembly. Related to this, the molded-in-place sealing ·bead eliminates the possibility of an incorrect assembly of a loose gasket in the groove in the oil pan. Thus, an oil pan, or other components, provided with a molded-in-place sealing bead is particularly suitable for automated assembly by robots. In addition, the molded-in-place sealing bead permits a more positive control of the gasket size inasmuch as the tolerance range of the sealing bead profile is reduced and the gasket size conforms more exactly to the groove of the oil pan or other component thereby eliminating the profile of tolerance for length, width, and the like. Also, the possibility of gasket rollover is substantially eliminated.

From the foregoing description, one skilled in the art can easily ascertain the essential characteristics of the invention and, without departing from the spirit and scope thereof, can make various changes and modifications of the invention and adapt it to various usages and conditions.

Claims

1. A method for producing a seal molded-in-place on a substrate comprising:
   a) providing a two-part liquid cure composition; and
   b) supplying said liquid cure composition to a surface of said substrate maintained at a temperature

7

sufficiently low to prevent physical distortion and damage to said substrate.

2. The method for producing a seal molded-in-place in accordance with claim 1, further comprising:

c) curing said liquid cure composition on said surface of said substrate.

3. The method for producing a seal molded-in-place in accordance with claim 2, wherein said curing is performed at a curing temperature is maintained below about 400°F.

4. The method for producing a seal molded-in-place in accordance with claim 3 wherein said curing temperature is in the range of about 350°F.-400°F.

5. The method for producing a seal molded-in-place in accordance with claim 4, wherein said curing temperature is about 350°F.

6. The method for producing a seal molded-in-place in accordance with claim 4, wherein said curing temperature is maintained for a time within the range of about 15 minutes to 30 minutes.

7. The method for producing a seal molded-in-place in accordance with claim 6, wherein said time is about 30 minutes.

8. The method for producing a seal molded-in-place in accordance with claim 1, wherein said supplying said liquid cure composition comprises injecting said liquid cure composition into a space provided between said surface of the substrate and a mold surface placed against said surface of the substrate to enclose said space.

9. The method for producing a seal molded-in-place in accordance with claim 8, wherein said liquid cure composition has a viscosity within the range of about 500,000 to about 1,500,000 centipoises.

10. The method for producing a seal molded-in-place in accordance with claim 9, wherein said two-part liquid cure composition includes a first part containing a catalyst and a second part containing a cross-linking agent.

11. The method for producing a seal molded-in-place in accordance with claim 10, wherein said first part and said second part are present in a ratio of about 1:1 to about 10:1.

12. The method for producing a seal molded-in-place in accordance with claim 11, wherein said two-part liquid cure composition is a platinum reactive system.

13. The method for producing a seal molded-in-place in accordance with claim 11, wherein said two-part liquid cure composition is selected from the group consisting of silicone rubber compositions and organopolysiloxane compositions.

14. The method for producing a seal molded-in-place in accordance with claim 13, wherein said two-part liquid cure composition is an organopolysiloxane composition comprising a diorganopolysiloxane oil, finely divided reinforcing silica, a structuring inhibitor, and a cross-linking agent.

15. The method for producing a seal molded-in-place in accordance with claim 13, wherein said two-component liquid sealing material is a SiH-olefin platinum catalyzed composition.

16. The method for producing a seal molded-in-place in accordance with claim 8, wherein said substrate comprises a metallic substance and a composite substance.

17. The method for producing a seal molded-in-place in accordance with claim 16, wherein said substrate is in the form of an oil pan, rocker cover, timing chain cover, intake manifold, water pump housing, oil filter adapter, gear case cover, transmission differential cover, and oil cooler cover.

18. The method for producing a seal molded-in-place in accordance with claim 17, wherein said substrate is an oil pan.

19. The method for producing a seal molded-in-place in accordance with claim 17, wherein said metallic substances is selected from the group consisting of aluminum and steel.

20. The method for producing a seal molded-in-place in accordance with claim 19, wherein said metallic substance is aluminum.

21. The method for producing a seal molded-in-place in accordance with claim 19, wherein said composite substance is selected from the group consisting of thermoset compositions.

22. The method for producing a seal molded-in-place in accordance with claim 21, wherein said thermoset compositions are selected from the group consisting of vinyl ester, polyester, phenolic, and polyamideimide compositions.

23. An article of manufacture comprising a substrate having a molded-in-place seal comprising a cured liquid reactive polymer.

24. The article of manufacture of claim 23, wherein said substrate is a member selected from the group consisting of a metallic substance and a composite substance.

25. The article of manufacture of claim 24, wherein said substrate is in the form of an oil pan, rocker cover, timing chain cover, intake manifold, water pump housing, oil filter adapter, gear case cover, transmission differential cover, and oil cooler cover.

26. The article of manufacture of claim 25, wherein said substrate is an oil pan.

8

27. The article of manufacture of claim 24, wherein said metallic substances is selected from the group consisting of aluminum and steel.

28. The article of manufacture of claim 27, wherein said metallic substance is aluminum.

29. The article of manufacture of claim 27, wherein said composite substance is selected from the group consisting of thermoset compositions.

30. The article of manufacture of claim 29, wherein said thermoset compositions are selected from the group consisting of vinyl ester, polyester, phenolic, and polyamideimide compositions.

31. The article of manufacture in accordance with claim 23 wherein said liquid reactive polymer is a two-part liquid cure composition.

32. The article of manufacture of claim 31, wherein said two-part liquid cure composition includes a first part containing a catalyst and a second part containing a cross-linking agent.

33. The article of manufacture of claim 32, wherein said first part and said second part are present in a ratio of about 1:1 to about 10:1.

34. The article of manufacture of claim 33, wherein said two-part liquid cure composition is a platinum reactive system.

35. The article of manufacture of claim 32, wherein said two-part liquid cure composition is selected from the group consisting of silicone rubber compositions and organopolysiloxane compositions.

36. The article of manufacture of claim 35, wherein said two-part liquid cure composition is an organopolysiloxane composition comprising a diorganopolysiloxane oil, finely divided reinforcing silica, a structuring inhibitor, and a cross-linking agent.

37. The article of manufacture of claim 35, wherein said two-component liquid sealing material is a SiH-olefin platinum catalyzed composition.

38. The article of manufacture of claim 37, wherein said seal has a void volume within the range of about 4-17%.

39. The article of manufacture of claim 35, wherein said seal has a design compression within the range of about 15-30%; and a compression set of less than about 35%.

40. An article of manufacture comprising an oil pan having a molded-in-place gasket of a silicone rubber composition with a void volume in the range of about 15-30%, a design compression within the range of about 15-30%, and a compression set of less than 35%.

*Fig 1*

Fig. 2

AT NOMINAL CONDITION

— MAX COMPRESSION: 36%
— NOM COMPRESSION: 27%
— MIN COMPRESSION: 18%

*Fig 3A*

SECTION AT APEX OF END LOOPS

VOID/VOLUME

AREA OF GROOVE: 25.0 sq mm

AREA OF GASKET: 23.8 sq mm

PERCENT OF FILL: 5%

NOM COMPRESSION: 17.5%

SECTION ALONG SIDE RAILS

*Fig 3B*

VOID/VOLUME

AREA OF GROOVE: 25.0 sq mm

AREA OF GASKET: 20.9 sq mm

PERCENT OF FILL: 16.5%

Fig 3C

SECTION AT APEX OF END LOOPS